# FASCICULE DE BREVET EUROPEEN

(11) **EP 1 862 817 B1**
(45) Date de publication et mention de la délivrance du brevet: **13.07.2011**
(21) Numéro de dépôt: 07109115.1
(22) Date de dépôt: 29.05.2007
(51) Int. Cl.: G01S 7/292, G01S 13/524

(54) **Procédé de reduction du nombre de fausses alarmes notamment lors d'une détection radar**
Verfahren zur Verringerung der Anzahl von Fehlalarmen, insbesondere während einer Radarortung
Method of reducing the number of false alarms, in particular during radar detection

(30) Priorité: 30.05.2006 FR 0604808
(43) Date de publication de la demande: 05.12.2007
(73) Titulaire: THALES, 92200 Neuilly sur Seine (FR)
(72) Inventeur: Guguen, Stéphane, 92210 Saint-Cloud (FR); Lupinski, Ludovic, 92320 Chatillon-sous-Bagneux (FR); Lentilhac, Sophie, 33190 Casseuil (FR)
(74) Mandataire: Lucas, Laurent Jacques

(56) Documents cités:
- EP-A1- 0 030 750
- EP-A2- 1 319 960
- US-B1- 6 380 887

## Description

La présente invention concerne un procédé de réduction de fausses alarmes notamment lors d'une détection radar. L'invention s'applique notamment à l'amélioration du taux de fausses alarmes pour un radar aéroporté subissant des interférences dues à la proximité avec d'autres radars.

La détection radar est généralement polluée par différents types d'interférences et notamment par des interactions avec d'autres radars dues au fait qu'ils émettent dans des bandes de fréquences relativement proches. Ces interactions peuvent notamment concerner les émissions des radars embarqués des différents équipiers d'une patrouille volant en formation rapprochée. Dans ce cas, les différents radars des équipiers peuvent soit émettre dans une même longueur d'onde, soit émettre dans des plages de longueur d'onde adjacentes, c'est à dire avec ou sans décalage hyperfréquence. En effet par leur construction les radars embarqués ont une bande de fréquence d'émission fixe et restreinte. Il n'est donc pas toujours possible d'avoir des longueurs d'onde distinctes pour tous les radars embarqués par les équipiers. Le fonctionnement du radar en présence de telles interférences est dégradé du fait de la présence de nombreuses fausses alarmes dues à la présence des émissions radar voisines. II est ainsi nécessaire que le radar soit robuste vis à vis de la fausse alarme afin de réguler le taux de fausses alarmes.

Un traitement couramment utilisé afin de réduire le nombre de fausses alarmes obtenues lors de la détection réside dans l'utilisation d'algorithmes dit à Taux de Fausses Alarmes Constant ou TFAC. Ces algorithmes visent à réduire le taux de fausses alarmes à un taux acceptable par exemple une fausse alarme par minute.

Les algorithmes TFAC connus sont basés sur l'observation d'une fenêtre d'analyse du signal reçu et sur un seuil local de détection. La fenêtre d'analyse est en fait une région observée pendant un court instant par le radar. Le signal réfléchi par les différents obstacles et éventuellement par la cible dans la région d'observation est capté par le radar. A partir de ce signal, les procédés de traitement des signaux radar construisent une carte représentée sous la forme d'un ensemble de cases ou cellules. A chaque case de la carte est affecté le niveau du signal reçu correspondant à une distance D de l'obstacle ou de la cible par rapport au radar et à une fréquence Fd du signal Doppler sur le signal réfléchi lié à la vitesse de la cible. La taille de la case est donc liée à la résolution en distance et en fréquence doppler du radar. La carte ainsi obtenue donne un domaine (dₐ,vₐ), où dₐ représente la distance ambiguë et Va la vitesse ambiguë.

Le principe de base d'un algorithme TFAC est de comparer à un instant donné le contraste de niveau entre une case de la carte dite case sous test et des cases environnantes. La valeur de contraste est obtenue en calculant l'écart entre le niveau de la case sous test et la moyenne de la puissance dans les cases environnantes, c'est-à-dire le bruit ambiant. Si cette valeur de contraste est supérieure à un seuil fixé, il y a détection. On considère donc dans ce cas que l'on est en présence d'une cible. Ce principe permet donc de ne pas générer de détection alors que le signal reçu peut s'apparenter à du bruit ambiant.

Parmi les algorithmes TFAC connus, l'algorithme TFAC de type rectangle, estime le bruit dû à l'ambiance en prenant comme contribution l'ensemble des cases contenues dans un rectangle autour de la case sous test. Cet algorithme présente une bonne détection en ambiance claire, c'est à dire en présence d'interférences constantes ou en l'absence d'interférences. Par contre, il présente un nombre de fausses alarmes important en présence d'interactions avec d'autres radars.

Un autre algorithme TFAC, l'algorithme TFAC de type croix, réduit le bruit dû à l'ambiance en prenant comme contribution les cases iso-distance et iso-vitesse avec la case test situées de part et d'autre de celle-ci. Ce traitement donne pour sa part un nombre de fausses alarmes faible en présence d'interactions avec d'autres radars. Cependant en ambiance claire, la sensibilité du radar est peu satisfaisante, et donne une perte de traitement pouvant atteindre 1,8 dB.

Afin de fournir des résultats acceptables aussi bien en ambiance claire qu'en ambiance polluée, une solution mise en oeuvre utilise les deux algorithmes TFAC précités de manière parallèle et prend les résultats de l'un ou de l'autre en comparant le bruit ambiant obtenu pour une même case test avec l'un ou l'autre des algorithmes. Si l'algorithme TFAC croix donne un niveau d'ambiance supérieur à l'algorithme TFAC rectangle à une constante près fixée, le résultat de l'algorithme TFAC croix est alors utilisé. Cette méthode entraîne une perte de sensibilité du radar, elle est de plus assez peu robuste et s'accompagne donc d'une mauvaise maîtrise des fausses alarmes.

Un tel algorithme est connu de port le document US 6 380 887 B1.

La présente invention s'applique donc à fournir un traitement qui soit robuste en ambiance polluée notamment par des phénomènes d'interactions radar et qui soit en même temps sensible au niveau de la détection en ambiance claire c'est à dire avec peu d'interférences ou une interférence constante dans le domaine distance-vitesse (dₐ,vₐ).

Un but de l'invention est notamment de pallier les inconvénients précités. A cet effet, l'invention a pour objet un procédé de réduction du nombre de fausses alarmes lors d'une détection radar. Le procédé selon l'invention utilise avantageusement en parallèle deux chaînes de traitement algorithmique à Taux de Fausses Alarmes Constant ou TFAC. L'une des chaînes de traitement utilise un TFAC de type rectangle et l'autre utilise un TFAC de type croix. La détection est alors issue de la chaîne de traitement algorithmique TFAC de type croix lorsque le rapport entre le nombre de détections réalisées avec l'algorithme TFAC rectangle et le nombre de détections réalisées avec l'algorithme TFAC croix devient supérieur à un seuil α₀. Dans les autres cas la détection provient de la chaîne de traitement algorithmique TFAC de type rectangle.
La comparaison avec le seuil α₀ est effectuée uniquement si le nombre de détections réalisées au moyen de l'algorithme TFAC rectangle dépasse un seuil Max_FA caractéristique du nombre maximum de fausses alarmes obtenues avec l'algorithme TFAC rectangle en ambiance claire.
La détermination du seuil α₀ est effectuée préalablement à la mise en oeuvre grâce à une simulation des détections réalisées au moyen de chacun des deux algorithmes TFAC croix et TFAC rectangle en fonction de la forme d'onde caractéristique du radar.
La détermination du seuil Max_FA est effectuée en prenant le nombre maximum de fausses alarmes obtenues au niveau de la queue de la loi de distribution caractérisant la probabilité d'occurrence d'un nombre donné de fausses alarmes dans le cas de l'utilisation de l'algorithme TFAC de type rectangle en ambiance claire, sur bruit thermique uniquement.

L'invention a notamment pour principaux avantages qu'elle est simple à mettre en oeuvre, qu'elle s'adapte à différents types de brouillage, qu'elle s'applique à tous radars aéroportés ou de surface et enfin qu'elle s'applique à tous les modes de radar : haute fréquence de récurrence, moyenne fréquence de récurrence et basse fréquence de récurrence.

D'autres caractéristiques et avantages de l'invention apparaîtront à l'aide de la description qui suit faîte en regard des dessins annexés qui représentent :
- la figure 1a : le principe de l'algorithme TFAC croix,
- la figure 1b : le principe de l'algorithme TFAC rectangle,
- la figure 2a : la carte du domaine (dₐ,vₐ) pour deux radars Moyenne Fréquence de Récurrence avec un écart en hyperfréquence nul,
- la figure 2b : la carte du domaine (dₐ,vₐ) pour deux radars Haute Fréquence de Récurrence avec un écart en hyperfréquence important,

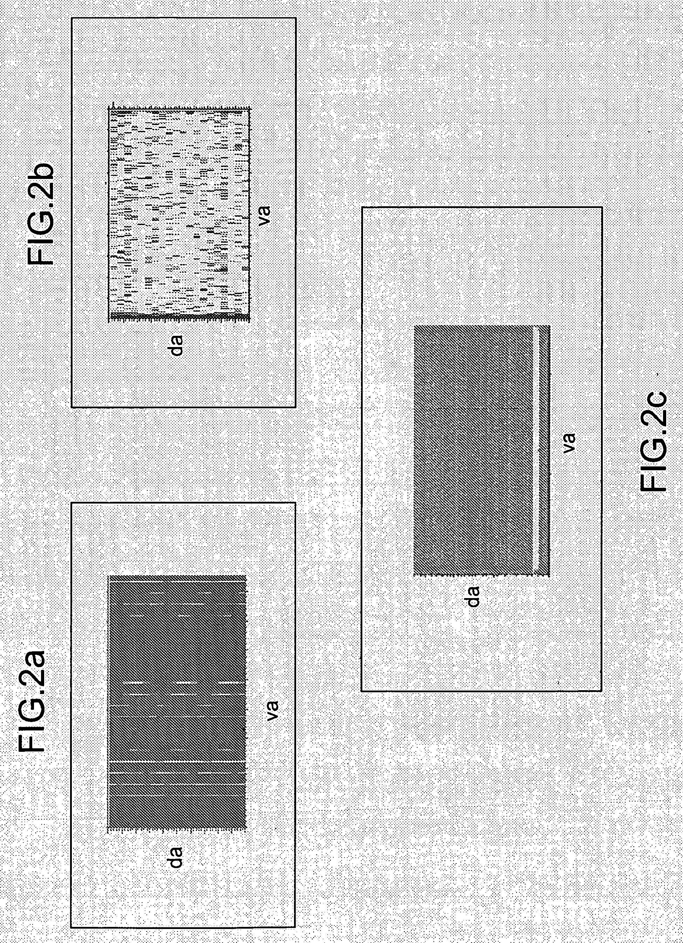

- la figure 2b : la carte du domaine (dₐ,vₐ) pour deux radars Moyenne Fréquence de Récurrence avec un écart en hyperfréquence important et une synchronisation des fréquences de récurrence,

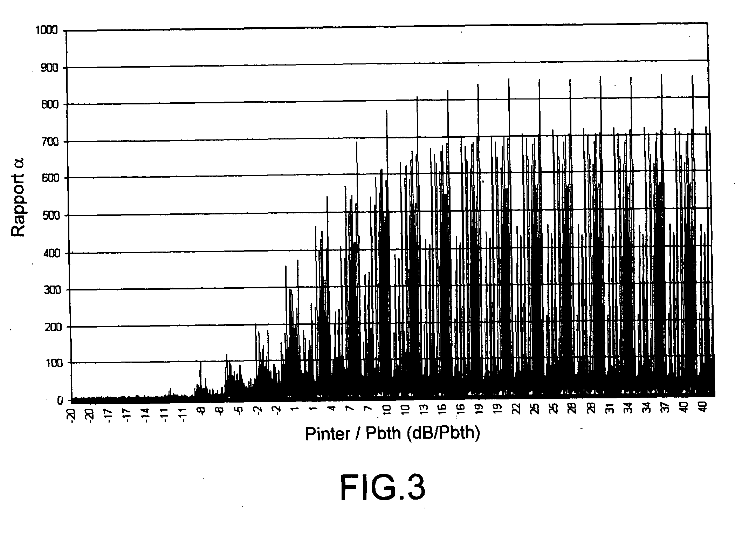

- la figure 3 : le rapport du nombre de fausses alarmes obtenues par les algorithmes TFAC rectangle et TFAC croix en fonction du niveau d'interaction,

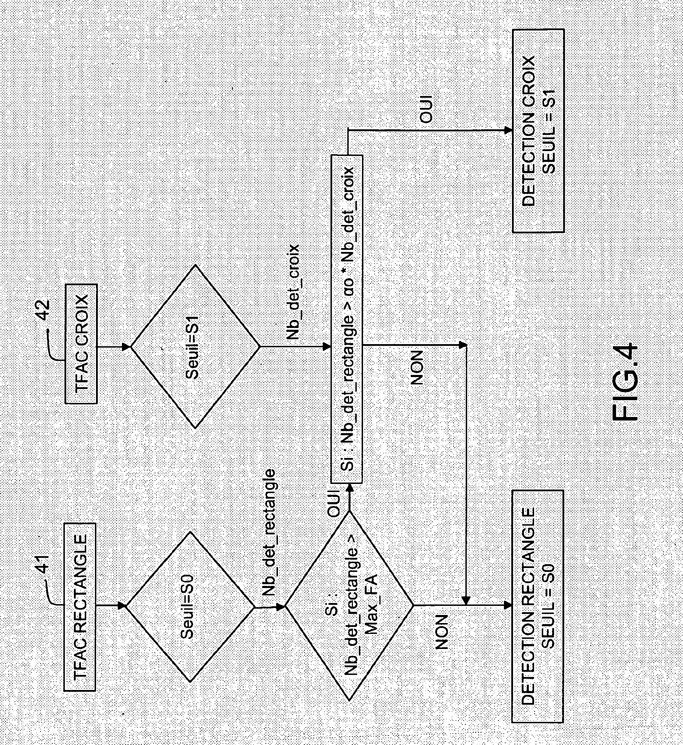

- la figure 4 : le synoptique de l'algorithme de maîtrise de la fausse alarme dans le cadre de l'invention,

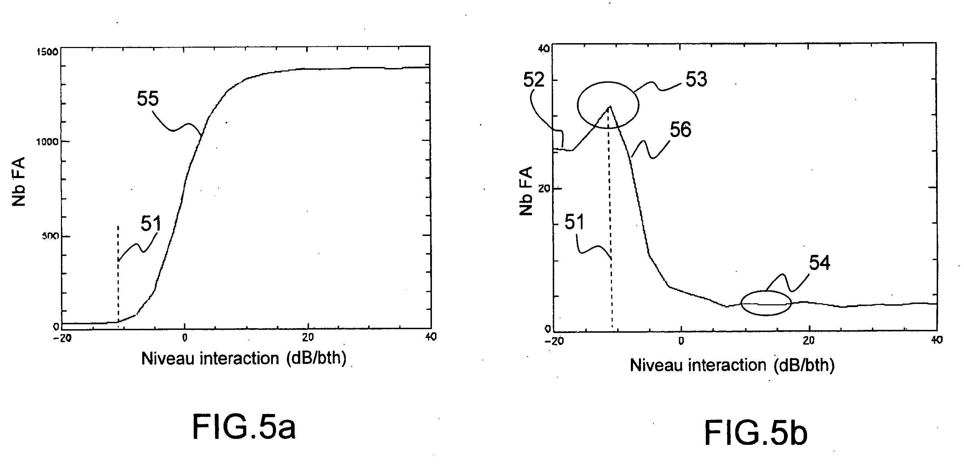

- la figure 5a : le nombre de fausses alarmes pour des niveaux d'interaction donnés obtenu en utilisant le TFAC rectangle,
- la figure 5b : le nombre de fausses alarmes pour des niveaux d'interaction donnés obtenu en utilisant la double chaîne TFAC selon l'invention,

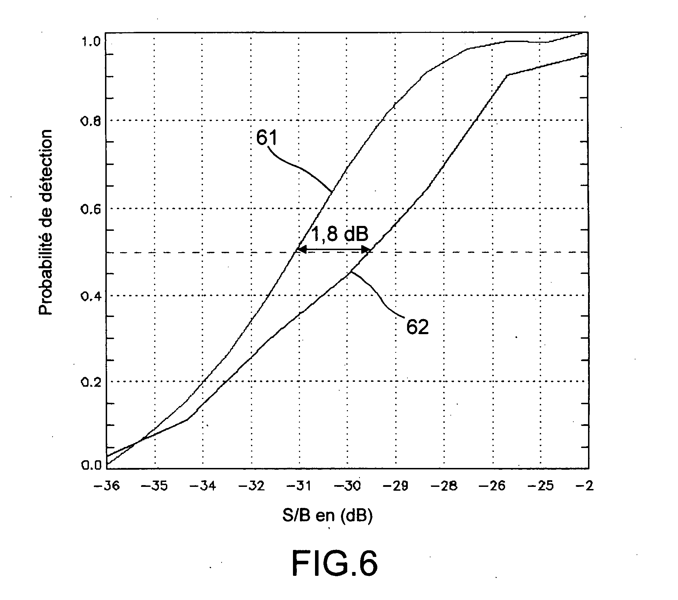

- la figure 6 : la probabilité de détection en fonction du rapport signal à bruit entre le TFAC croix et la double chaîne TFAC selon l'invention.

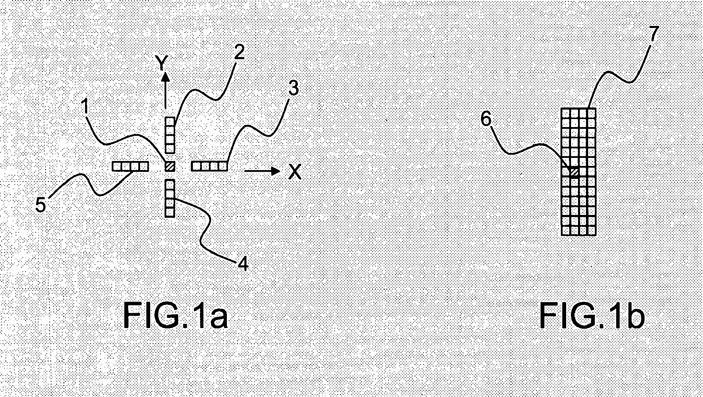

Les figures 1a et 1b illustrent les configurations des cases distance-vitesse utilisées afin de calculer le contraste associé à une case sous test 1 pour l'algorithme TFAC croix et 6 pour l'algorithme TFAC rectangle. Pour l'algorithme TFAC croix, le contraste associé à la case sous test 1 peut être calculé en prenant la valeur maximale des moyennes sur chacune des branches 2, 3, 4 et 5 de la puissance du signal reçu sur chaque case. La valeur du contraste est ainsi calculée en privilégiant deux axes de la carte : X et Y. De manière générale, cet algorithme est très robuste dans des ambiances polluées. Pour l'algorithme TFAC rectangle, le contraste associé à la case sous test 6 peut être calculé en prenant la moyenne des puissances associées à chaque case inscrite dans le rectangle 7. Ce traitement donne donc de bons résultats lorsque le bruit ambiant est réparti de manière uniforme sur le domaine (dₐ,vₐ) comme c'est le cas en ambiance claire.
Dans les deux cas, le contraste est comparé à un seuil calculé afin d'assurer un niveau prédéfini de fausse alarme typiquement fixé à une fausse alarme par minute. L'invention utilise avantageusement ces deux algorithmes en parallèle afin de tirer profit de la sensibilité de l'algorithme TFAC rectangle en ambiance claire et de la robustesse de l'algorithme TFAC croix en ambiance polluée.

Les figures suivantes 2a, 2b, 2c présentent la carte du domaine (dₐ,vₐ) en présence d'interactions de plusieurs types. Ainsi comme le montrent les différentes figures, la pollution due aux interactions est répartie de manière plus ou moins localisée. Les paramètres jouant sur la répartition de cette pollution sont d'une part l'écart en hyperfréquence des deux radars, pollué et pollueur, et d'autre part la valeur des fréquences de récurrence du radar pollué et du radar pollueur. Dans le cas de deux radars Haute Fréquence de Récurrence ou HFR ayant un écart en hyper fréquence nul tel que présenté sur la figure 2a, la pollution se répartie de manière non uniforme et très localisée selon un axe privilégié dₐ. Sur la figure 2b, deux radars Moyenne Fréquence de Récurrence ou MFR ayant un écart en hyper fréquence important conduisent à une pollution répartie de manière globalement uniforme sur le domaine (dₐ,vₐ) selon les axes dₐ et vₐ. Dans le troisième exemple de la figure 2c, les radars sont synchronisés en fréquence de récurrence et ont un écart en hyper-fréquence important. Dans ce dernier cas, la pollution se répartit de manière assez incohérente sur le domaine. Cependant cette répartition privilégie globalement les axes dₐ et Va.
En résumé, les figures présentées montrent que globalement la pollution due à une interaction radar se localise préférentiellement suivant les deux axes distance ambiguë dₐ et vitesse ambiguë Vₐ· Ainsi le type d'algorithme TFAC utilisé doit être adapté à cette configuration afin de maîtriser la fausse alarme de manière efficace. Des deux algorithmes présentés précédemment, seul l'algorithme TFAC croix présente une configuration adaptée au traitement de ces interférences particulières. Les résultats de cet algorithme seront donc préférentiellement utilisés dans le cadre de l'invention en présence de ce type d'interférences. L'algorithme TFAC rectangle quant à lui, s'il n'est pas adapté au traitement des interactions radar, est particulièrement adapté à la présence de bruit thermique bth qui se caractérise par une puissance moyenne identique pour chaque case ainsi que par une fluctuation connue. Cet algorithme permet en présence de ces seules interférences d'avoir une sensibilité de détection bien plus importante que l'algorithme TFAC croix dans les mêmes conditions. Le procédé selon l'invention privilégie donc par exemple en l'absence d'interaction radar les résultats provenant de l'algorithme TFAC rectangle.

La figure 3 présente l'évolution du rapport α entre le nombre de fausses alarmes obtenues avec un algorithme TFAC rectangle et le nombre de fausses alarmes obtenues avec un algorithme TFAC croix, en fonction du rapport entre la puissance des interactions Pinter et la puissance du bruit thermique Pbth, Pinter étant exprimé dB/Pbth. Ce graphique permet de déterminer un critère afin de sélectionner les résultats de l'algorithme le plus approprié à traiter les interférences en présence. Le critère de sélection doit être très sensible car la fausse alarme peut apparaître suivant la nature de la pollution pour des puissances d'interaction de l'ordre de 10 dB en dessous du bruit thermique par exemple. Une étude, faite par exemple grâce à des simulations fonctionnelles réalisées sur des signaux synthétiques représentatifs de données réelles comme par exemple sur des signaux d'un radar MFR, permet de déterminer le nombre de fausses alarmes obtenues en utilisant l'algorithme TFAC croix et le nombre de fausses alarmes obtenues en utilisant l'algorithme TFAC rectangle.
Le rapport α est alors calculé pour des niveaux de puissance d'interaction variant de -20 dB/Pbth à 40 dB/Pbth. Les deux chaînes sont réglées afin d'obtenir un taux de fausses alarmes de l'ordre par exemple d'une fausse alarme par minute. Sur le graphique de la figure 3 le rapport α est assez faible lorsque le niveau d'interaction est inférieur à -10 dB/Pbth puis il augmente très rapidement en atteignant des valeurs importantes supérieures à 100. On peut donc ainsi déterminer une constante α₀ qui représente le rapport α à partir duquel l'algorithme TFAC croix donne de meilleurs résultats que l'algorithme TFAC rectangle, c'est-à-dire lorsque le nombre de fausses alarmes obtenues avec l'algorithme TFAC rectangle devient très grand en regard du nombre de fausses alarmes obtenues avec l'algorithme TFAC croix. Le rapport α permet donc de détecter la présence ou non d'interactions. Ce critère est donc avantageusement utilisé par le procédé selon l'invention afin de basculer de l'utilisation des résultats de la chaîne TFAC rectangle à l'utilisation des résultats de la chaîne TFAC croix.

La figure 4 présente un algorithme de gestion parallèle des deux chaînes algorithmiques 41 et 42 exploitant le critère de décision précédemment défini. Le procédé selon l'invention comporte une chaîne 41 utilisant le TFAC rectangle et une chaîne 42 utilisant le TFAC croix. Le principe général du procédé est de privilégier la chaîne utilisant le TFAC rectangle lorsque le nombre de fausses alarmes dans le domaine (dₐ,vₐ) reste inférieur à une limite appelée Max_FA. Cette limite dépend de la loi de distribution du nombre de fausses alarmes dans le cas de l'utilisation de l'algorithme TFAC rectangle en ambiance claire, sur bruit thermique uniquement. Max_FA est alors le nombre maximum de fausses alarmes en queue de distribution, donc pour une faible occurrence, il peut être par exemple égal à 10 fausses alarmes par minute.
L'algorithme selon le procédé de l'invention est le suivant : chacune des deux chaînes produit un nombre de détections Nb_det_rectangle pour la chaîne 41 et Nb_det_croix pour la chaîne 42. Ces détections sont obtenues en prenant en compte un seuil dans les algorithmes TFAC qui est S0 pour la chaîne 41 et S1 pour la chaîne 42. Une fois le nombre de détections obtenues en sortie de la chaîne TFAC rectangle, on compare celui-ci à Max_FA, s'il est inférieur, les détections obtenues sont considérées comme correctes. Dans le cas contraire, l'algorithme a pour objectif de déterminer si ce nombre anormal de détections est dû à la présence de cibles ou non. A cette fin la constante α₀, qui peut être par exemple égale à 3, est utilisée comme décrit par la suite. Le rapport entre le nombre de détection Nb_det_rectangle et le nombre de détections obtenues grâce à l'algorithme TFAC croix, Nb_det_croix est calculé. Si le résultat est inférieur à α₀ cela signifie que les détections sont bien dues à la présence de cibles. En effet dans ce cas les résultats obtenus avec la chaîne 41 et avec la chaîne 2 sont assez proches. Les détections obtenues grâce à l'algorithme TFAC rectangle sont alors conservées. Lorsque le rapport calculé est supérieur à α₀, les résultats du TFAC rectangle sont considérés comme fortement biaisés. Les détections prises en compte sont alors celles réalisées par la chaîne 42 utilisant l'algorithme TFAC croix.

Les figures 5a et 5b présentent un exemple du comportement obtenu vis-à-vis du traitement de la fausse alarme en utilisant le procédé selon l'invention. La figure 5a représente la courbe 55 du nombre de fausses alarmes obtenues en utilisant l'algorithme TFAC rectangle seul en fonction de l'accroissement du niveau d'interaction. Sur les figures 5a et 5b l'axe des abscisses représente le nombre de fausses alarmes Nb FA, et l'axe des ordonnés le niveau d'interaction exprimé en dB/bth, bth étant le bruit thermique. Il apparaît sur cette figure qu'à partir d'un point 51 il y a déclenchement de la fausse alarme liée à l'interaction et que cette fausse alarme croit rapidement avant de se stabiliser à un nombre de fausses alarmes supérieur à 1000 par exemple. La figure 5b représente la courbe 56 du nombre de fausses alarmes en fonction de l'accroissement du niveau d'interaction obtenu en utilisant l'algorithme selon l'invention. Le nombre initial de fausses alarmes 52 est nominal : il correspond au nombre de fausses alarmes obtenues en ambiance claire avec l'algorithme TFAC rectangle. Au moment du déclenchement 51 des fausses alarmes liées à l'interaction, la double chaîne entre en jeu par l'intermédiaire du critère α₀ afin de limiter l'accroissement de la fausse alarme à un niveau tolérable comme représenté en 53. La fausse alarme diminue alors de manière importante jusqu'à atteindre un nombre de fausses alarmes de l'ordre de une par minute comme dans la zone 54 du graphique. Le procédé algorithmique mis en oeuvre selon l'invention permet donc de maîtriser le taux de fausse alarme de manière efficace et significative en ambiance polluée notamment par des phénomènes d'interaction radar.

La figure 6 montre la sensibilité de l'algorithme selon l'invention dans le cas d'une ambiance claire. Ainsi sur le graphique de la figure 6 les résultats de probabilité de détection d'une cible en ambiance claire en fonction du rapport signal à bruit sont représentés pour la double chaîne TFAC par la courbe 61 et pour la chaîne TFAC croix par la courbe 62. Les deux courbes permettent de remarquer le gain de sensibilité au niveau de la détection des cibles qui peut aller, notamment dans l'exemple pris, jusqu'à 1.8 dB. L'algorithme selon l'invention permet donc d'accroître la sensibilité de la chaîne de détection en ambiance claire et ainsi d'accroître la portée de détection d'environ 10% par exemple pour des scénarios réalisés en ambiance non polluée.

En plus des avantages cités précédemment, le procédé selon l'invention s'adapte à différents types de brouillage par le fait qu'il améliore les résultats de l'algorithme non pas en jouant sur un paramètre d'entrée des algorithmes TFAC mais en exploitant le résultat de l'algorithme TFAC le plus adapté à l'ambiance. Il s'adapte donc de fait à différents types et niveaux de gêne ainsi qu'à la forme d'onde du radar pollueur par exemple.
Le procédé selon l'invention peut s'appliquer avantageusement à tout radar aéroporté ou de surface. II suffit de calculer la constante prise en compte dans le critère de sélection de la chaîne algorithmique en fonction du type de l'onde du radar. De la même manière, le procédé selon l'invention peut s'appliquer à différents modes radar : HFR, MFR et BFR.
Le procédé a l'avantage d'être facile à mettre en oeuvre car le critère de sélection est déterminé une fois pour toutes pour un type de radar donné, il ne nécessite donc aucun réglage particulier lors de l'utilisation de la chaîne de détection. Le procédé a également l'avantage de s'appliquer sur un système de double chaîne existant par ailleurs mais ayant des résultats inférieurs à ceux obtenus avec le procédé selon l'invention.

## Revendications

1. Procédé de réduction du nombre de fausses alarmes lors d'une détection radar utilisant en parallèle deux chaînes de traitement algorithmique à taux de fausses alarmes constant ou TFAC, l'une utilisant un TFAC de type rectangle (41) et l'autre utilisant un TFAC de type croix (42) **caractérisé en ce que** la détection est issue de la chaîne de traitement algorithmique TFAC de type croix (42) lorsque le rapport entre le nombre de détections réalisées avec l'algorithme TFAC rectangle et le nombre de détections réalisées avec l'algorithme TFAC croix devient supérieur à un seuil α₀, dans les autres cas la détection provient de la chaîne de traitement algorithmique TFAC de type rectangle (41).

2. Procédé selon la revendication 1 **caractérisé en ce que** la comparaison avec le seuil α₀ est effectuée uniquement si le nombre de détections réalisées au moyen de l'algorithme TFAC rectangle dépasse un seuil Max_FA caractéristique du nombre maximum de fausses alarmes obtenues avec l'algorithme TFAC rectangle en ambiance claire.

3. Procédé selon la revendication 1 **caractérisé en ce que** la détermination du seuil (α₀ est effectuée préalablement à la mise en oeuvre grâce à une simulation des détections réalisées au moyen de chacun des deux algorithmes TFAC croix et TFAC rectangle en fonction de la forme d'onde caractéristique du radar.

4. Procédé selon la revendication 2 **caractérisé en ce que** la détermination du seuil Max_FA est effectuée en prenant le nombre maximum de fausses alarmes obtenues au niveau de la queue de la loi de distribution caractérisant la probabilité d'occurrence d'un nombre donné de fausses alarmes dans le cas de l'utilisation de l'algorithme TFAC de type rectangle en ambiance claire, sur bruit thermique uniquement.

5. Procédé selon l'une quelconque des revendications précédentes **caractérisé en ce que** le radar est en mode basse fréquence de récurrence.

6. Procédé selon l'une quelconque des revendications 1 à 4 **caractérisé en ce que** le radar est en mode haute fréquence de récurrence.

7. Procédé selon l'une quelconque des revendications précédentes, **caractérisé en ce que** le radar est un radar de surface.

## Claims

1. Method of reducing the number of false alarms during radar detection using in parallel two constant false alarm rate or CFAR algorithmic processing chains, one using a rectangle-type CFAR (41) and the other using a cross-type CFAR (42), **characterised in that** the detection comes from the cross-type CFAR algorithmic processing chain (42) when the ratio between the number of detections achieved with the rectangle CFAR algorithm and the number of detections achieved with the cross CFAR algorithm becomes greater than a threshold α₀, and in the other cases the detection comes from the rectangle-type CFAR algorithmic processing chain (41).

2. Method according to claim 1, **characterised in that** the comparison with the threshold α₀ is carried out only if the number of detections achieved by means of the rectangle CFAR algorithm exceeds a threshold Max_FA characteristic of the number of false alarms obtained with the rectangle CFAR algorithm in a clear environment.

3. Method according to claim 1, **characterised in that** the threshold α₀ is determined prior to implementation by simulating the detections achieved by means of each of the two algorithms, cross CFAR and rectangle CFAR, as a function of the characteristic waveform of the radar.

4. Method according to claim 2, **characterised in that** the threshold Max_FA is determined by taking the maximum number of false alarms obtained at the tail end of the law of distribution characterising the probability of occurrence of a given number of false alarms in the case of using the rectangle-type CFAR algorithm in a clear environment, over thermal noise alone.

5. Method according to any one of the preceding claims, **characterised in that** the radar is in low pulse repetition frequency mode.

6. Method according to any one of claims 1 to 4, **characterised in that** the radar is in high pulse repetition frequency mode.

7. Method according to any one of the preceding claims, **characterised in that** the radar is a surface radar.

## Patentansprüche

1. Verfahren zum Verringern der Anzahl von Fehlalarmen bei einer Radarortung unter paralleler Verwendung von zwei algorithmischen TFAC-(Taux de Fausses Alarmes Constant - konstante Fehlalarmrate)-Verarbeitungsketten, von denen die eine eine TFAC des Rechtecktyps (41) und die andere eine TFAC des Kreuztyps (42) verwendet, **dadurch gekennzeichnet, dass** die Ortung von der algorithmischen TFAC-Verarbeitungskette des Kreuztyps (42) kommt, wenn das Verhältnis zwischen der Zahl der mit dem TFAC-Rechteckalgorithmus und der Zahl der mit dem TFAC-Kreuzalgorithmus realisierten Ortungen größer als ein Schwellenwert α₀ ist, und in den anderen Fällen die Ortung von der algorithmischen TFAC-Verarbeitungskette des Rechtecktyps (41) kommt.

2. Verfahren nach Anspruch 1, **dadurch gekennzeichnet, dass** der Vergleich mit dem Schwellenwert α₀ nur dann erfolgt, wenn die Zahl der mit dem TFAC-Rechteckalgorithmus erfolgten Ortungen einen Schwellenwert Max_FA übersteigt, der für die maximale Anzahl an Fehlalarmen charakteristisch ist, die mit dem TFAC-Rechteckalgorithmus bei klarer Umgebung erhalten werden.

3. Verfahren nach Anspruch 1, **dadurch gekennzeichnet, dass** die Ermittlung des Schwellenwerts α₀ vor dem Betrieb dank einer Simulation von mit jedem der beiden TFAC-Kreuz- und -Rechteckalgorithmen realisierten Ortungen in Abhängigkeit von der charakteristischen Wellenform des Radars erfolgt.

4. Verfahren nach Anspruch 2, **dadurch gekennzeichnet, dass** die Ermittlung des Schwellenwerts Max_FA erfolgt, indem die maximale Anzahl der Fehlalarme genommen wird, die am Ende der Verteilungskurve erhalten werden, die die Wahrscheinlichkeit des Auftretens einer gegebenen Zahl von Fehlalarmen im Falle der Anwendung des TFAC-Algorithmus des Rechtecktyps in klarer Umgebung nur mit thermischem Rauschen charakteristiert.

5. Verfahren nach einem der vorherigen Ansprüche, **dadurch gekennzeichnet, dass** das Radar im Modus mit niedriger Wiederholungsfrequenz ist.

6. Verfahren nach einem der Ansprüche 1 bis 4, **dadurch gekennzeichnet, dass** das Radar im Modus mit hoher Wiederholungsfrequenz ist.

7. Verfahren nach einem der vorherigen Ansprüche, **dadurch gekennzeichnet, dass** das Radar ein Oberflächenradar ist.
